# EUROPEAN PATENT SPECIFICATION

(11) **EP 3 956 123 B1**
(45) Date of publication and mention of the grant of the patent: **24.07.2024**
(21) Application number: 20722436.1
(22) Date of filing: 16.03.2020
(51) Int. Cl.: B29C 49/56, B29C 49/36, B29C 49/48

(54) **PROPULSION MECHANISM FOR A MOULDING DIE**
ANTRIEBSVORRICHTUNG FÜR EIN FORMWERKZEUG
MÉCANISME DE PROPULSION POUR UNE MATRICE DE MOULAGE

(30) Priority: 19.04.2019 BG 11291919
(43) Date of publication of application: 23.02.2022
(73) Proprietor: Index- 6 Ltd, 4004 Plovdiv (BG)
(72) Inventor: YUSEIN, Erol Yusein, 4000 Plovdiv (BG); MINCHEV, Evgeni Ivanov, 4000 Plovdiv (BG); SPASOV, Petar Georgiev, 4000 Plovdiv (BG)
(74) Representative: Ilarionov, Pavko Jordanov
(86) International application number: PCT/BG2020/000012
(87) International publication number: WO 2020/210881

(56) References cited:
- EP-A1- 2 977 175
- EP-A1- 3 102 383
- US-A1- 2008 260 888

## Description

### Field of the Invention

The invention relates to a propulsion mechanism for a moulding die, which will find application, in particular, in rotary blowing machines for production of containers (bottles) made of thermoplastic materials.

### Background of the Invention

In the rotary blowing machines, a plurality of moulding dies are arranged radially around a central axis. For the precise operation of the blowing machine, it is essential, that the opening and closing of the parts of each moulding die is well synchronized, as well as the good synchronization with the movement of the other devices, that interact when operating the rotary blower.

There is a known propulsion mechanism for a moulding die, composed of two control cams, fitted one above the other on a common control axis, connected to a drive unit, in this case an electric motor.

Each cam is in contact with a roll, placed on one of the two arms of a lever mechanism, connected to carriers, on which the half shells of the moulding die are mounted. The carriers are coupled to the central vertical axis of the moulding die. The lever mechanism and one of the two cams, in this case, the upper one, are firmly connected to each other by means of a rod and a spring.

In this solution, one of the two control cams is used to close the moulding die, while the other is used to open it.

The device also has a cam element, connected to the two cams, which cam element is provided with a control element for vertical reciprocating of the bottom part of the moulding die. The system for performing vertical reciprocal movement of the bottom part of the moulding die is synchronized with the movement of the two cams. (DE102008045569)

In the known solution, the movement of the propulsion mechanism parts is not smooth enough and the mechanism itself is "shock" loaded, when the moulding die is opening and closing.

In the known mechanism, the loads (forces) that are transferred to the arms and bearings for controlling of the two carriers during the blowing process, as well as during closing the moulding die, are asymmetrical, i.e. the one cam and arm are loaded much more than the other cam and arm, which results in asymmetrical loading and wearing of the propulsion mechanism's parts. This requires the use of more solid parts and / or parts with larger overall dimensions for the propulsion mechanism.

EP 2977175T describes a bottle blowing machine that comprises: a machine frame; a mould opening and closing assembly, comprising a fixed mould plate, a bottom mould, and a moving mould plate rotatably connected with the fixed mould plate by a rotation shaft; an elevating assembly, comprising a protrusion disposed on the rotation shaft, an elevating rod fixedly connected with the bottom mould and a sliding block fixed on the elevating rod, a guiding groove is opened on the protrusion and the sliding block is slidably inserted into the guiding groove; in the course of rotation of the rotation shaft, the contact position of the guiding groove with the sliding block rises or descends, and the sliding block moves in the up-down direction under the guiding of the guiding groove; a bottom mould locking assembly, comprising a plurality of swing members for driving the sliding of the plurality of locking parts; a rotation member for controlling the swinging of the plurality of swing members relative to the machine frame; and a power source for driving the rotation of the rotation shaft. When the mould opening and closing assembly is in the mould closing state, the plurality of locking parts contact against the bottom mould such that the bottom mould is separated from the machine frame.

Another known invention (US 2008/260888) concerns a unit for molding containers, comprising: a pair of half-molds, mounted respectively on two supports mobile in horizontal translation; a primary transmission controlling the movement of the supports; a mold base mounted on a support mobile in vertical translation; a secondary transmission controlling the movement of the mold base support; a locking device, comprising two mobile locks co-operating each with a half-mold support; a tertiary transmission controlling the movement of the locks. The transmissions include cams mounted on a common shaft, respectively coupled to the half-mold supports, to the mold base support and to the locks.

EP 3102383 discloses a bottle blowing machine that comprises: blowing mold which comprises two half molds with a cyclic opening and closing device, a drum cam with two cam tracks, a cam follower and levers for transmitting the opening and closing motion of the two half molds. The cam follower follows the first cam track to produce a first opening movement of the two half molds with a first maximum opening angle greater than that achieved when the cam follower follows the second cam track of the drum cam. A disc cam with one or two cam tracks controls the vertical translation of the mold bottom for the opening and closing movement.

In the known solution, the movement of the propulsion mechanism parts is not smooth enough and the mechanism itself is "shock" loaded, when the moulding die is opening and closing.

### Summary of the Invention

It is an object of the present invention to provide a propulsion mechanism for a moulding die, that is characterized by an increased smoothness of movement, which leads to increased operating durability and reliability.

This task is accomplished by a propulsion mechanism for a moulding die for production of bottles from thermoplastic polymers, composed of upper and lower control cams, mounted one above the other and secured to a common control axis, coupled to a driving unit. Each of the cams is connected to one of two carriers, to each of which is mounted one of the half shells of the moulding die. The carriers are coupled to the central vertical axis of the moulding die.

The propulsion mechanism also includes a system for performing a reciprocating vertical movement of the bottom forming part of the moulding die, synchronized with the movement of the upper and lower cams.

According to the invention, in the upper cam are made grooves, whose angular position is orientated and synchronized with that of a groove, made in the lower cam.

In the grooves of the upper cam are attached bearing axes, to which are connected first movable arms. Two of the movable arms are coupled at the other end to fixed bodies (the machine frame), and the other two are attached to the movable carriers of the of the moulding die.

A driven bearing is engaged to the bottom of the lower cam, while in the groove, made in the lower cam is mounted a drive bearing, secured to an "r"- shaped arm. To the "r"-shaped arm, through a bearing axis, are mounted second movable arms, connected to a guide, where the second movable arms drive the guide in vertical axial direction.

The bottom forming part of the moulding die is attached to the guide.

The advantages of the invention are the increased smoothness in the movement of the two carriers, the increased operating reliability and the extended life of the propulsion mechanism.

### Brief description of the drawings

An exemplary embodiment of the invention is shown in the accompanying drawings, where:
**Fig. 1** is a side view of a moulding die with a propulsion mechanism;
**Fig. 2** is an axonometric view of a moulding die with a propulsion mechanism;
**Fig. 3** is a top view of a moulding die with a propulsion mechanism in opened position;
**Fig. 4** is a top view of a moulding die with a propulsion mechanism in closed position.

### Detailed description of the invention

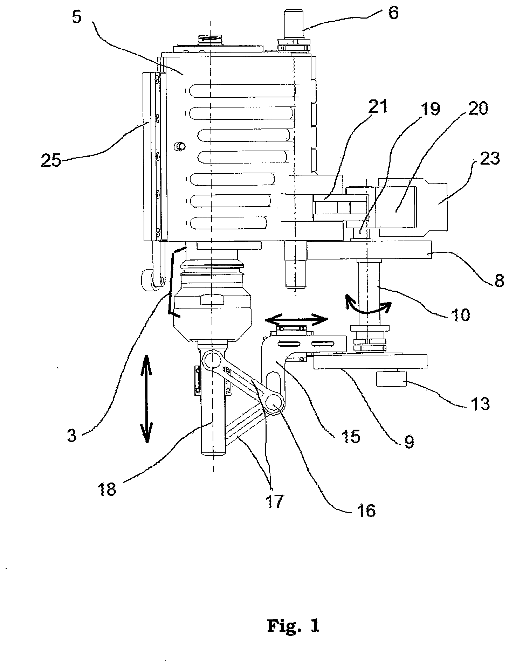

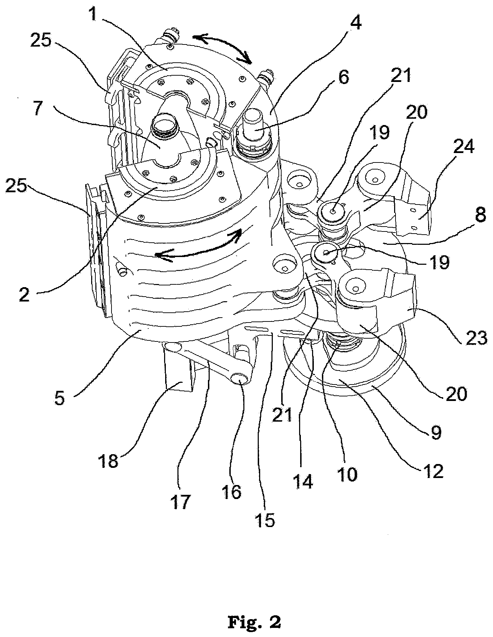

Generally, a moulding die for production of thermoplastic polymer containers (bottles) consists of three main parts - a left half shell 1, a right half shell 2 and a bottom forming part 3. The left half shell 1 and the right half shell 2 are symmetrical and mounted on carriers 4 and 5, which carriers are mounted on a common central vertical axis 6 so that they can make a reverse rotation around their common vertical axis 6 - **Fig. 1** and **Fig. 2****.**

The bottom forming part 3 of the moulding die can only perform a vertical reciprocating motion between the two half shells 1 and 2.

In the closed position, the three parts of the moulding die - the two half shells (1 and 2) and the bottom forming part 3 form a hollow, closed body, the shape of which determines the shape of the container being produced - in this case, the bottle 7.

The propulsion mechanism of a moulding die for moulding thermoplastic containers, itended for mounting on rotary or stepping blowing machines, consists of two control cams - upper cam 8 and lower cam 9, which are secured to a common control axis 10, coupled with a drive unit.

In the upper cam 8 are made grooves 11, formed according to certain calculations, depending on the type of the machine, (e.g. if it is for large or small size containers, or if it is for low or high productivity, etc.), whereby the angular position of these grooves 11 is oriented and synchronized with that of a groove 12, made in the lower cam 9.

A driven bearing 13 is engaged to the bottom of the lower cam 9 and in the groove of the lower cam 9 is mounted a drive bearing 14, which is secured to an "r"- shaped horizontal arm 15 - **Fig. 1** **and** **2****.** To the "r"- shaped arm 15 are also attached via a bearing axis 16, second movable arms 17, connected to a guide 18, so that the second movable arms 17 drive the guide 18 in vertical axial direction. The bottom forming part 3 of the molding die is attached to the guide 18.

In the grooves of the upper cam 8 are mounted bearings 19, to the axes of which are attached first movable arms 20 and 21. The first movable arms 20 are connected at the other end to fixed bodies 23 and 24, and the first movable arms 21 are connected to the movable carriers 4 and 5, which are coupled to the central common vertical axis 6.

The half shells 1 and 2, forming the bottle 7, as well as the locking mechanism 25, are attached to the movable carriers 4 and 5.

### Mode of operation

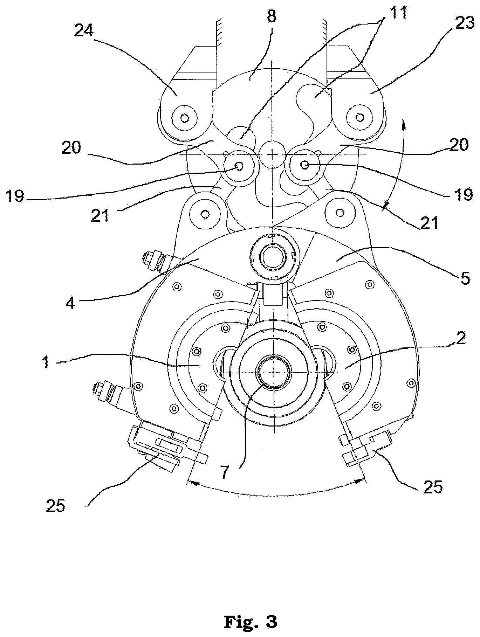

After placing a preform for forming a container of thermoplastic material in the moulding die, which is initially opened **(****Fig. 2** **and** **Fig. 3****),** the control cams - upper 8 and lower 9 are rotated by the bearing 13, which receives torque from another mechanism mechanically through a cam or from an electric motor or pneumatic cylinder (not shown in the accompanying figures).

When driven, the bearing 13, rotates the cam 8 and 9 simultaneously, as shown on **Fig. 1****.** When the upper cam 8 performs an angular rotation, the axes of the bearings 19 also begin to move, following the profile of the grooves 11, made in cam 8. Together with the axes of the bearings 19, the first movable arms 20 and 21 begin a plane rotation, whereby the movement is being transmitted to the carriers 4 and 5, to which the half shells 1 and 2 are attached to form the thermoplastic container 7. Prior to reaching the end positions of the carriers 4 and 5, the bearing 14, mounted in the groove 12 of the cam 9, drives the "r"- shaped arm 15. The "r"- shaped arm 15, in turn, drives the rotating second movable arms 17 by means of a bearing axis 16, which second movable arms 17, in turn, drive in a vertical axial direction the guide 18, to which the part 3 of the moulding die, forming the bottom of the container 7, is attached.

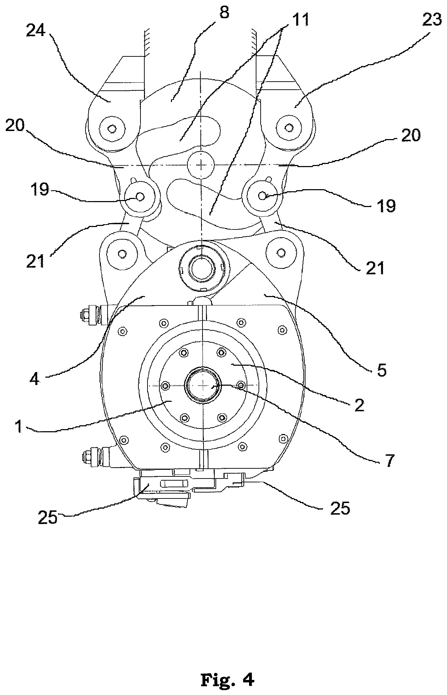

Once the bottom forming part 3 reaches it's extreme vertical position, the carriers 4 and 5 continue turning until they reach their extreme closed position **(****Fig.4****).** To ensure the correct closure of the carriers 4 and 5, they are secured by a locking mechanism 25.

## Claims

1. A propulsion mechanism for a moulding die for production of bottles from thermoplastic polymers, consisting of:
- upper (8) and lower (9) control cams, mounted one above the other and secured to a common control axis (10), coupled to a driving unit, whereby each of the cams is connected to one of two carriers (4 and 5), to each of which is mounted one of the half shells (1 and 2) of the moulding die, whereby the carriers (4 and 5) are coupled to the central vertical axis (6) of the moulding die;
- where the propulsion mechanism also includes a system for performing a reciprocating vertical movement of the bottom forming part (3) of the moulding die, synchronized with the movement of the upper (8) and lower (9) cams,
- where in the upper cam (8) are made grooves (11), whose angular position is orientated and synchronized against a groove (12), made in the lower cam (9), whereby in the grooves (11) of the upper cam (8) are mounted bearings (19), to the axes of which are fastened first movable arms (20 and 21), whereby the first movable arms (20) are connected at the other end to fixed bodies (23 and 24), and the first movable arms (21) are connected to the movable carriers (4 and 5),
- whereby a driven bearing (13) is engaged to the bottom of the lower cam (9) and in the groove (12) of the lower cam (9) is mounted a drive bearing (14), secured to an "r "- shaped arm (15),
**characterized in that,**
- the "r"-shaped arm (15) is mounted through a bearing axis (16) to second movable arms (17), connected to a guide (18), to which the bottom forming part (3) of the moulding die is attached, whereby the second movable arms (17) drive the guide (18) in vertical axial direction.

## Patentansprüche

1. Stellglied für eine Antriebsvorrichtung für ein Formwerkzeug für die Herstellung von Flaschen aus thermoplastischen Polymeren, bestehend aus:
- obere (8) und untere (9) Steuerkknöchel, die übereinander angebracht und an einer gemeinsamen Steuerachse (10) befestigt sind, die mit einem Stellglied gekoppelt ist, wobei jede der Knöchel (8 und 9) mit einem von zwei Trägern (4 und 5) gekoppelt ist, an denen jeweils eine der Halbschalen (1 und 2) des Formwerkzeugs angebracht ist, wobei die Träger (4 und 5) mit einer zentralen vertikalen Achse (6) des Formwerkzeugs gekoppelt sind,
- wobei der Aktuator ferner ein System zur Durchführung einer vertikalen Hin- und Herbewegung des unteren Formteils (3) des Formwerkzeugs synchronisiert mit der Bewegung der oberen (8) und unteren (9) Nocken umfasst,
- wobei in dem oberen Knöchel (8) Nuten (11) ausgebildet sind, deren Winkelposition relativ zu einer in der unteren Knöchel (9) ausgebildeten Nut (12) ausgerichtet und synchronisiert ist, wobei in den Nuten (11) der oberen Knöchel (8) Lager (19) angebracht sind, an deren Achsen die ersten beweglichen Arme (20 und 21) befestigt sind, wobei die ersten beweglichen Arme (20) am anderen Ende mit festen Körpern (23 und 24) und die ersten beweglichen Arme (21) mit beweglichen Trägern (4 und 5) verbunden sind,
- wobei ein Antriebslager (13) an den Boden des unteren Knöchels (9) geklemmt ist und ein Antriebslager (14) in der Nut (12) des unteren Knöchels (9) montiert und an den "r"-förmigen Arm (15) geklemmt ist,
**dadurch gekennzeichnet ist, dass**
- der Arm (15) über eine Lagerachse (16) an zweiten beweglichen Armen (17) angebracht ist, die mit einer Führung (18) verbunden sind, an dem unterex Formteil (3) des Formwerkzeugs befestigt ist, wodurch die zweiten beweglichen Arme (17) die Führung (18) in einer vertikalen axialen Richtung antreiben.

## Revendications

1. Mécanisme de propulsion pour une matrice de moulage destinée à la production de bouteilles en polymères thermoplastiques, comprenant:
- une came de commande supérieure (8) et une came de commande inférieure (9) montées l'une au-dessus de l'autre et fixées à un axe de commande commun (10) couplé à un dispositif d'actionnement, où chacune des cames (8 et 9) est reliée à l'un des deux supports (4 et 5) à chacun desquels est montée l'une des demi-coquilles (1 et 2) de la matrice de moulage, où les supports (4 et 5) sont reliés à l'axe vertical central (6) de la matrice de moulage,
- où le mécanisme de propulsion comprend également un système permettant d'effectuer un mouvement de va-et-vient vertical de la partie de formage inférieure (3) de la matrice de moulage, synchronisé avec le mouvement de la came supérieure (8) et de la came inférieure (9),
- où des rainures (11) sont formées dans la came supérieure (8) dont la position angulaire est orientée et synchronisée par rapport à une rainure (12) formée dans la came inférieure (9), où des roulements (19) sont montés dans les rainures (11) de la came supérieure (8), aux axes desquels sont fixés les premiers bras mobiles (20 et 21), où les premiers bras mobiles (20) sont reliés à l'autre extrémité à des corps fixes (23 et 24) et les premiers bras mobiles (21) sont reliés aux supports mobiles (4 et 5),
- où un roulement entraîné (13) est fixé au fond de la came inférieure (9) et un roulement d'entraînement (14) est monté dans la rainure (12) de la came inférieure (9) et fixé au bras en forme de «Γ» (15),
**caractérisé en ce que**
- le bras (15) est monté à travers un axe de roulement (16) à de seconds bras mobiles (17) reliés à un guide (18) auquel la partie de formage inférieure (3) de la matrice de moulage est fixée, de sorte que les seconds bras mobiles (17) entraînent le guide (18) dans une direction axiale verticale.
